# FASCICULE DE BREVET EUROPEEN

(11) **EP 2 861 487 B1**
(45) Date de publication et mention de la délivrance du brevet: **19.10.2016**
(21) Numéro de dépôt: 13731412.6
(22) Date de dépôt: 11.06.2013
(51) Int. Cl.: B62M 3/06, B62M 9/08

(54) **DISPOSITIF DE TRANSMISSION DE MOUVEMENT DE PEDALAGE SUR DES CYCLES POUR DEPLACEMENT OU ENTRAINEMENT**
PEDALANTRIEBSGETRIEBE AN FAHRRÄDERN FÜR FORTBEWEGUNG ODER ANTRIEB
PEDAL DRIVE TRANSMISSION DEVICE ON BICYCLES FOR DISPLACEMENT OR PROPULSION

(30) Priorité: 13.06.2012 FR 1201695
(43) Date de publication de la demande: 22.04.2015
(73) Titulaire: Gregoire, Claude, 37230 Luynes (FR)
(72) Inventeur: Gregoire, Claude, 37230 Luynes (FR)
(74) Mandataire: Cabinet Laurent & Charras
(86) Numéro de dépôt international: PCT/FR2013/051360
(87) Numéro de publication internationale: WO 2013/186483

(56) Documents cités:
- WO-A1-2006/114539
- WO-A1-2011/014915
- DE-A1- 19 900 680
- DE-A1-102005 032 538
- FR-A1- 2 944 772
- US-A- 5 113 713

## Description

L'invention se rattache au secteur technique des dispositifs de transmission de mouvement de pédalage sur des cycles, bicyclettes, et aussi des vélos d'appartement, d'entrainement et/ou de rééducation à position fixe en salle, par extension aux vélos à assistance électrique.

Traditionnellement, la transmission des mouvements de pédalage sur des bicyclettes, quelle qu'en soit leur utilisation, s'effectue par un dispositif incluant un pédalier avec un ou plusieurs pignons, coopérant en transmission avec une chaine montée sur un pignon ou dérailleur en roue arrière. Dans l'application du vélo d'entrainement, en salle de musculation chez le masseur - kinésithérapeute ou chez soi, généralement les vélos ont un système simplifié avec une seule possibilité d'entrainement. Pour les bicyclettes permettant de faire des parcours, les dérailleurs permettent d'adapter la force de pédalage à la difficulté du parcours en faisant varier le développement de la chaine sur un tour de pédalage. Différentes recherches ont été menées pour améliorer les performances des bicyclettes et l'utilisation de plateaux elliptiques a été proposée.

Le problème posé à l'origine de l'invention est celui de la difficulté de démarrage au pédalage, qui est en particulier rencontrée pour les enfants, et aussi adolescents ou adultes qui n'ont guère d'entrainement.

Par ailleurs, les vélos pour enfants fonctionnent pratiquement tous avec une chaine, qui est un moyen de transmission dangereux. Les fabricants doivent alors protéger les pignons avec une coque de protection, et ce, pour respecter les normes de sécurité qui deviennent de plus en plus drastiques. En outre, la dimension des roues laisse peu d'espace pour la mise en place d'un dérailleur.

On a constaté aussi qu'en plus de la difficulté de démarrage, l'enfant avait ensuite du mal à contrôler sa vitesse de pédalage en allant trop vite et pédalant dans le vide.

Pour les vélos d'entrainement et de rééducation, il faut en plus pour l'utilisateur vaincre l'inertie des moyens de freinage qui servent à amplifier l'effort physique de pédalage.

L'objectif recherché par l'invention était donc de trouver une solution qui facilite l'action de démarrage du pédalage en réduisant les efforts à engendrer, aussi bien pour des vélos dits de ville, vélos à assistance électrique, et des vélos d'appartement ou de rééducation comme exposé précédemment.

Une solution a été apportée par le Demandeur dans le brevet français FR 2 944 772 lui appartenant. Ce document est considéré comme l'état de la technique le plus proche.

Cette solution consistait à aménager le dispositif de transmission de mouvement de pédalage en mettant en oeuvre un plateau elliptique (1) avec une partie centrale (2) en acier de configuration sensiblement rectangulaire surmoulée de matériau élastomère ou plastique souple déformable, et le plateau elliptique (1) étant en polyamide souple additionné de fibre de verre pour donner une bonne résistance et permettant d'encaisser le déport de l'ellipse lors du passage petit et grand rayon. En outre un plateau circulaire (3) à l'arrière avec roue libre (4) et une courroie de transmission (5) accompagne le dispositif. On a ainsi représenté à titre de rappel figure 1 le dispositif décrit dans ce brevet français 2 944 772. L'objet de cette invention a fait l'objet d'un début d'exploitation qui a donné des résultats satisfaisants, cependant la configuration de la partie centrale liée au pédalier et surmoulée d'un matériau élastomère déformable ne permettait pas d'obtenir suffisamment d'amplitude pour percevoir une réelle sensation d'amélioration du confort au pédalage.

La démarche du Demandeur a donc été d'optimiser le dispositif en repensant la conception de celui-ci, tout particulièrement dans la construction du plateau elliptique et des moyens de garnissage en élastomère susceptibles d'absorber des efforts.

La solution apportée par le Demandeur répond ainsi à cet objectif. Cette nouvelle conception permet un mouvement de rotation rond et harmonieux. Le mouvement de pédalage est engagé de façon naturelle et il est facilité au démarrage par de petits développements de l'ellipse.

La solution apportée répond à la problématique posée.

Le dispositif de transmission de mouvement de pédalage sur des cycles pour déplacement ou entraînement du type comprenant un plateau elliptique avec une partie centrale recevant un matériau élastomère déformable, un plateau circulaire à l'arrière avec roue libre et courroie de transmission, est remarquable en ce que le plateau elliptique est conçu avec un agencement intérieur dans son épaisseur et largeur avec la configuration de plusieurs modules de configuration triangulaire, chaque module présentant deux bras reliés par une partie de jonction et chaque bras étant agencé avec une configuration évidée formant siège d'une pièce en matériau élastomère, et en ce que entre deux modules successifs est défini un espace pour le positionnement d'un composant ayant une configuration en étoile avec un nombre de bras égal au nombre d'espacements formés entre les modules, et en ce que les bras du dit composant sont agencés avec un évidement formant siège et à l'opposé une forme en saillie formant nervure participant au blocage des blocs élastomères, et en ce que des flasques extérieur et intérieur sont rapportés de part et d'autre du plateau elliptique en autorisant l'insertion de moyens de liaison ainsi que la manivelle de pédalier et l'axe de pédalier.

Ces caractéristiques et d'autres encore ressortiront bien de la suite de la description.

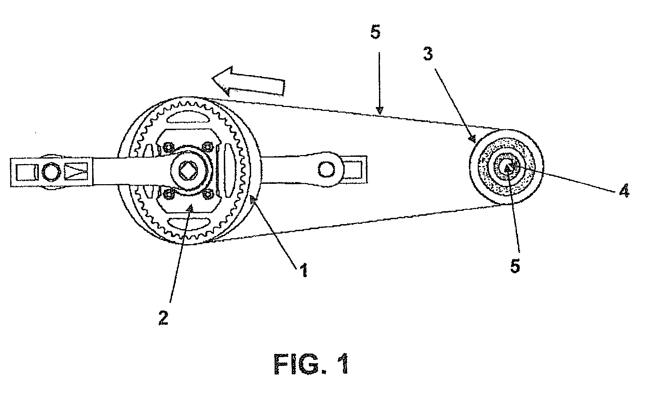

Pour fixer l'objet de l'invention illustré d'une manière non limitative aux figures des dessins où
- la figure 1 est une vue au titre de l'art antérieur du dispositif de transmission décrit dans le brevet français FR 2 944 772 et représentée dans une vue à caractère schématique dans la configuration où les pédales sont à l'horizontale,
- la figure 2 est une vue en situation éclatée du dispositif de transmission du mouvement de pédalage sur les cycles selon l'invention avec représentation en perspective de la succession de ces différents composants,

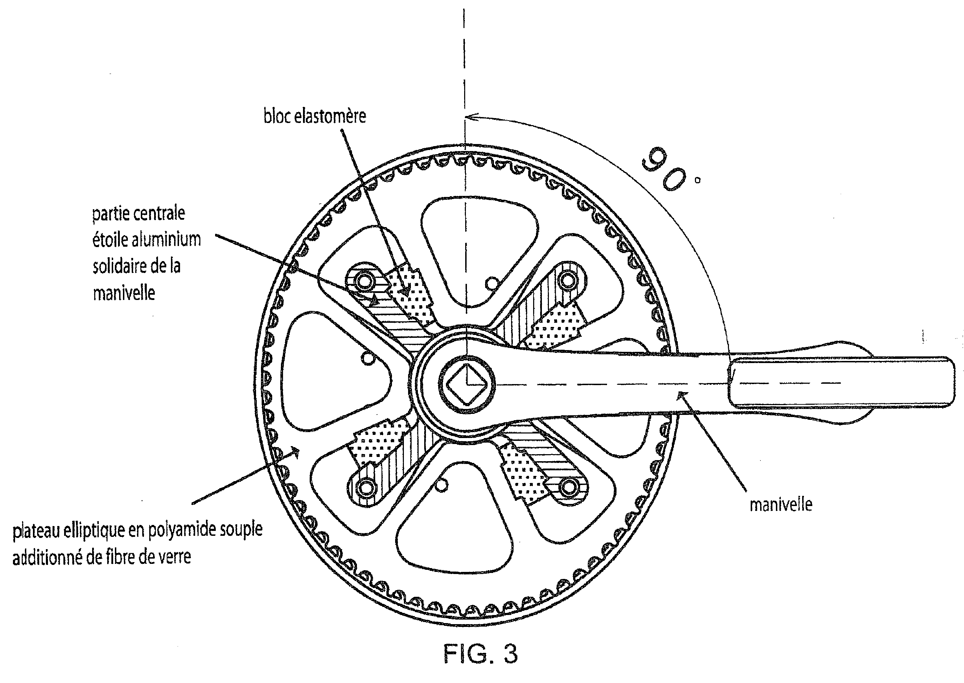

- la figure 3 est une vue de côté du dispositif monté, la manivelle étant en position horizontale,

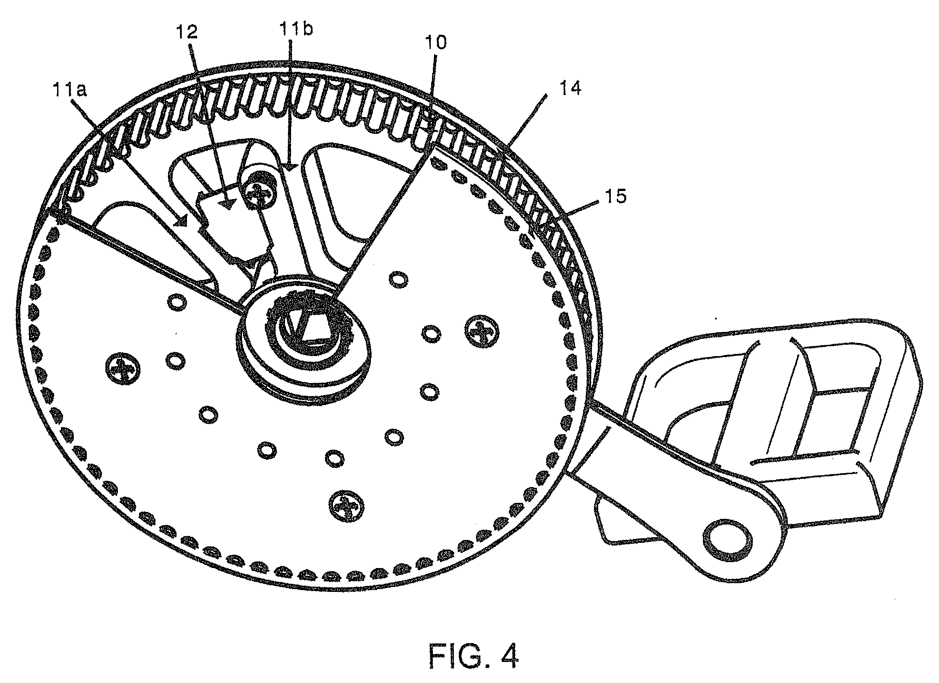

- la figure 4 est une vue du dispositif de transmission avec une coupe partielle du flasque intérieur permettant d'identifier la configuration et positionnement des blocs élastomères par rapport à la partie centrale en étoile solidaire de la manivelle,

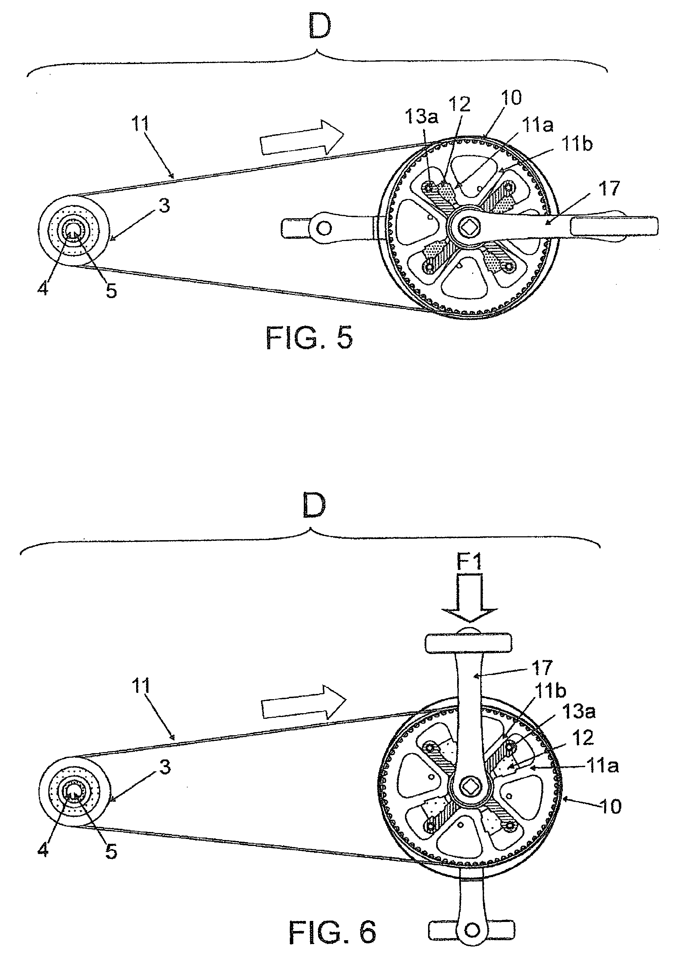

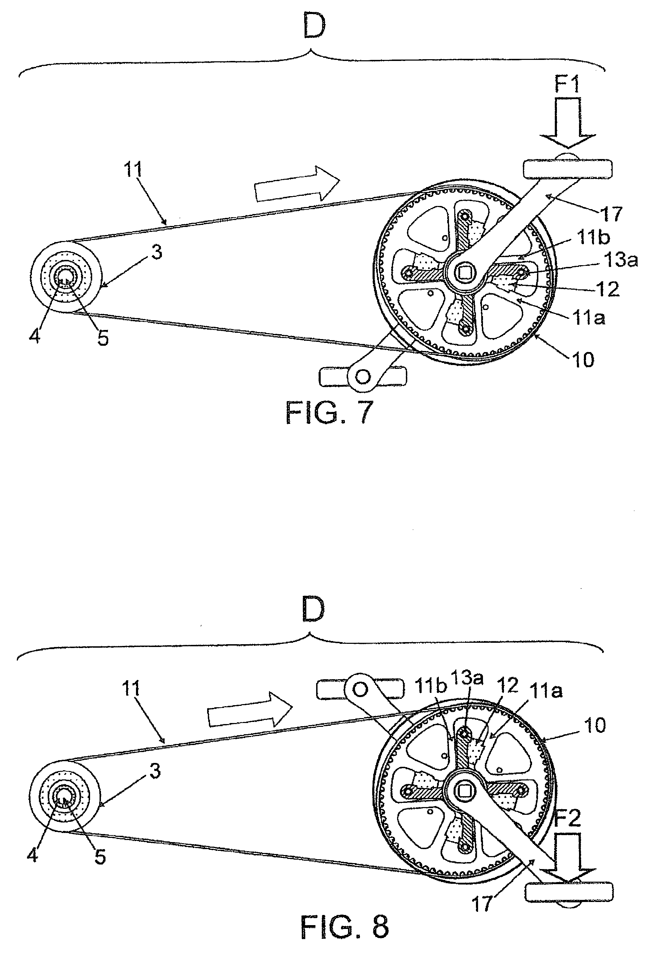

- les figures 5, 6, 7 et 8 sont des vues illustrant les différentes phases de positionnement du dispositif en fonction de l'emplacement de la manivelle,

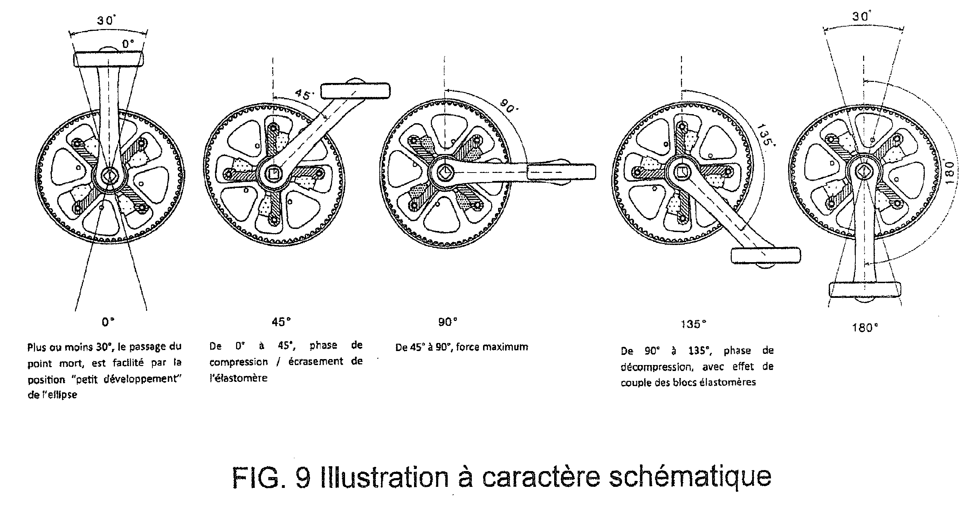

- la figure 9 à caractère schématique représente les différentes positions du dispositif selon les angulations de développement de la manivelle,

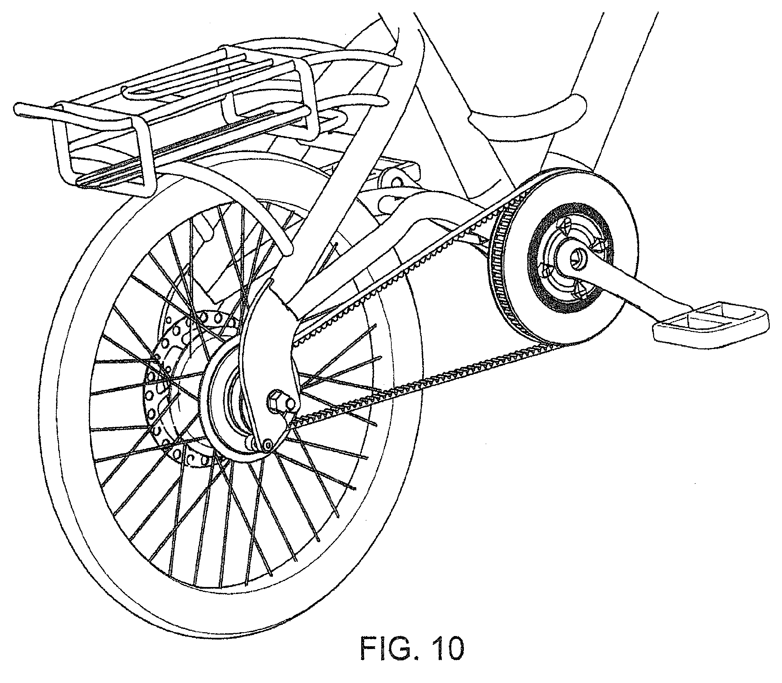

- la figure 10 illustre de manière schématique le positionnement du dispositif sur une bicyclette.

Afin de rendre plus concret l'objet de l'invention, on le décrit maintenant d'une manière non limitative illustré aux figures des dessins.

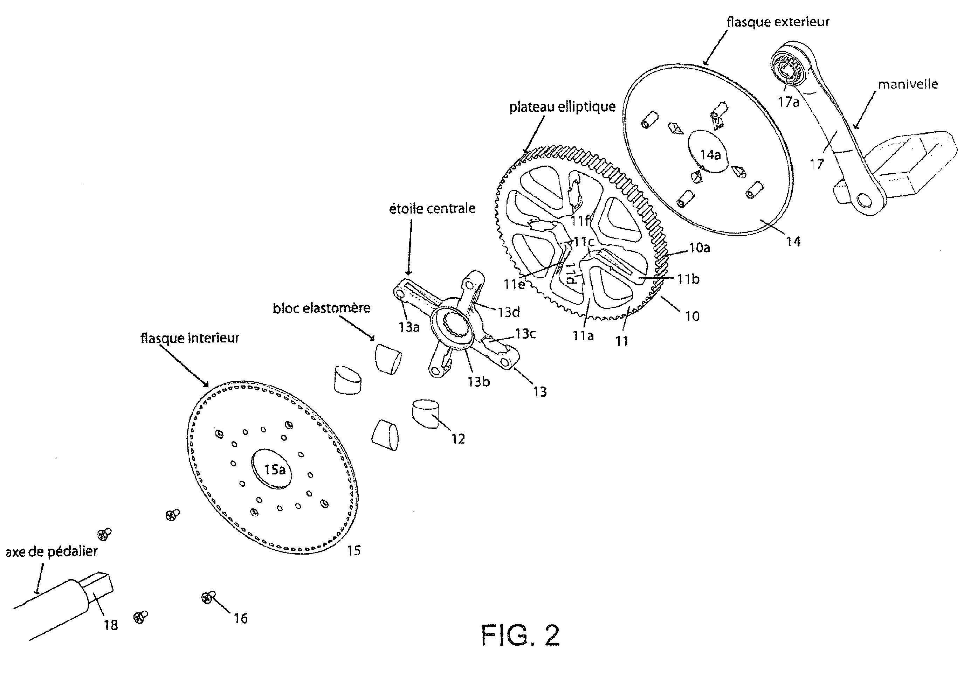

En se référant plus particulièrement à la figure 2, le dispositif comprend tout d'abord un plateau elliptique (10) qui présente une couronne périphérique extérieure crantée (10a) pour la coopération avec la chaîne de transmission (11) également crantée qui est associée avec le plateau circulaire (3) arrière disposé sur le moyeu de roue (5) par le système de roue libre (4) au pignon fixe de type connu décrit dans le brevet français FR 2 94472.

Le plateau elliptique (10) selon la présente invention est conçu avec une configuration particulière avec un agencement intérieur et dans l'épaisseur et la largeur du dit plateau (10) avec la configuration par exemple de plusieurs modules (11) de configuration triangulaire - 4 par exemples - établie lors de la fabrication du dit plateau elliptique (10). Chaque module (11) présente ainsi deux bras (11a) (11b) reliés en extrémité intérieure par une partie de jonction (11c). Un premier bras (11a) présente dans son épaisseur une configuration évidée (11d) formant siège d'une pièce (12) ultérieurement rapportée réalisée en un matériau élastomère. L'autre bras (11b) du module (11) opposé présente, lui, une configuration avec un nervurage (11e) qui est en saillie et qui est destiné à venir en regard de la partie évidée (11d) du module adjacent. Entre deux modules (11) adjacents est défini un espace (e) pour le positionnement d'un composant (13) ayant une configuration en étoile avec un nombre de bras (13a), avec un nombre de bras égal aux espacements formés entre les modules (11) précités. Ce composant (13) présente une forme en moyeu (13b) cylindrique qui est disposé au centre du plateau elliptique (10), et chacun des bras (13a) présente de manière similaire, d'une part sur un côté un évidement (13c) formant siège et à l'opposé une forme en saillie formant nervure (13d) destinée également à participer au blocage de blocs élastomères (12). Comme représenté figure 2, ces blocs élastomères (12) sont établis sous forme de pions qui sont disposés intérieurement entre, d'une part, une des faces des branches du composant (11) en étoile, et d'autre part, contre l'une des faces du module (10) configuré sur le plateau elliptique. En d'autres termes, les blocs élastomères (12) au nombre de quatre dans l'exemple représenté sont complètement positionnés et insérés dans l'espace volumétrique formé sur le plateau elliptique (10). En outre, des flasques extérieur (14) et intérieur (15) sont rapportés de part et d'autre du plateau elliptique pour assurer la fermeture de l'ensemble et ce par des moyens de liaison (16) du type pièces de fixation. Le composant (11) en forme d'étoile central, ainsi que le flasque intérieur (15) et le flasque extérieur (14) sont agencés avec des ouvertures (11f) (15a) (14a) intérieurement pour permettre le positionnement et l'insertion de la manivelle (17) par sa tête (17a) et de l'axe de pédalier (18) de liaison.

Ce nouveau concept du dispositif de transmission offre par sa configuration des avantages très supérieurs à ceux qui ont été décrits dans le brevet français FR 2 944 772. En effet, la compression des quatre blocs élastomères (12) assouplit le point de résistance à l'effort. Après un quart de tour, le rapport de transmission et la force d'utilisation sont à leur maximum, maintenant un mouvement de rotation rond et harmonieux. Le volume créé par les quatre blocs élastomères (12) est largement supérieur au bloc central avec un impact sur quatre points d'appui sur la plateau elliptique (10) de la poulie entraîné par le composant intermédiaire (13) en forme d'étoile centrale solidaire de la manivelle (17). Le passage de l'ellipse vers le petit développement s'accompagne d'une poussée supplémentaire par la décompression des quatre blocs élastomères de façon à réduire de manière significative et retarder la résistance au démarrage et pendant le pédalage par la compression et la décompression des blocs synthétiques dont la dureté est adaptée aux différents utilisateurs. Ceci donne donc un espace de compensation en adéquation avec les effets recherchés. Cette disposition est tout particulièrement originale puisqu'elle permet d'entraîner un plateau à circonvolution variable (plateau elliptique) en absorbant les à-coups liés au déport de l'ellipse lors du passage du petit au grand rayon en permettant ce mouvement de rotation rond et harmonieux. Cette solution apporte plus de confort pendant le pédalage puisqu'elle permet à la fois de passer le seuil du point mort plus rapidement par un effet de couple et l'ellipse étant sur le petit rayon, d'absorber le point de résistance lors du passage du grand rayon de l'ellipse et ce à chaque rotation. Cette solution donne de la souplesse durant toute la période de pédalage, souplesse qui est perceptible et appréciée durant les phases de relance ou de démarrage. L'invention apporte donc un effet technique très novateur par rapport à l'art antérieur.

## Revendications

1. Dispositif de transmission de mouvement de pédalage sur des cycles pour déplacement ou entraînement du type comprenant un plateau elliptique avec une partie centrale recevant un matériau élastomère déformable, un plateau circulaire à l'arrière avec roue libre et courroie de transmission, **caractérisé en ce que** le plateau elliptique (10) est conçu avec un agencement intérieur dans son épaisseur et largeur avec la configuration de plusieurs modules (11) de configuration triangulaire, chaque module présentant deux bras (11a) (11b) reliés par une partie de jonction (11c) et chaque bras (1 la) étant agencé avec une configuration évidée (11d) formant siège d'une pièce (12) en matériau élastomère, et **en ce que** entre deux modules successifs (11) est défini un espace (e) pour le positionnement d'un composant (13) ayant une configuration en étoile avec un nombre de bras (13a) égal au nombre d'espacements formés entre les modules, et **en ce que** les bras (13a) du dit composant sont agencés avec un évidement formant siège (13c) et à l'opposé une forme en saillie formant nervure (13d) participant au blocage des blocs élastomères (12), et **en ce que** des flasques extérieur (14) et intérieur (15) sont rapportés de part et d'autre du plateau elliptique (10) en autorisant l'insertion de moyens de liaison (16) ainsi que la manivelle (17) de pédalier et l'axe de pédalier (18).

2. Dispositif selon la revendication 1, **caractérisé en ce que** le bras (11b) du module (11) présente une configuration avec un nervurage (11e) destiné à venir en regard de la partie évidée (11d) du module adjacent ou de la partie évidée (13c) formée sur le bras (13a) disposé dans l'espace entre deux modules consécutifs.

## Patentansprüche

1. Vorrichtung zur Übertragung einer Pedalbewegung auf einem Fahrrad zum Fortbewegen oder Antrieb, die ein elliptisches Kettenblatt mit einem mittleren Bereich zur Aufnahme eines verformbaren Elastomerwerkstoffs aufweist sowie ein rundes Kettenblatt hinten mit Freilauf und Übertragungskette, **dadurch gekennzeichnet dass** die Konzeption des elliptischen Kettenblatts (10) eine innere Anordnung in seiner Stärke und Breite mit einer Konfiguration mehrerer Module (11) dreieckiger Konfiguration besitzt, wobei jedes Modul zwei Arme (11a) (11b) aufweist, die durch ein Verbindungsteil (11c) verbunden sind und jeder Arm (11a) im Aufbau eine Konfiguration mit Aussparung (11d) enthält, die den Sitz für ein Teil (12) aus Elastomerwerkstoff bildet, und dadurch dass zwischen zwei aufeinanderfolgenden Modulen (11) ein Raum (e) zur Positionierung eines sternförmig konfigurierten Bauteils (13) vorgesehen ist, dessen Anzahl Arme (13a) der Anzahl der zwischen den Modulen gebildeten Freiräume entspricht, und dadurch dass die Arme (13a) des besagten Bauteils eine Aussparung aufweisen, die einen Sitz (13c) bildet und auf der gegenüberliegenden Seite eine hervorstehende Form als Rippe (13d), die zum Feststellen der Elastomerklötze (12) beiträgt, sowie dadurch dass die Außen- (14) und Innenscheibe (15) zu beiden Seiten des elliptischen Kettenblatts (10) angesetzt sind und den Eingriff der Verbindungsmittel (16) ermöglichen sowie die Kurbel (17) des Tretlagers und die Achse des Tretlagers (18).

2. Vorrichtung nach Anspruch 1, **gekennzeichnet dadurch dass** der Arm (11b) des Moduls (11) eine Konfiguration mit einer Rippe (11e) aufweist, die dem ausgesparten Teil (11d) des nebenliegenden Moduls oder dem ausgesparten Bereich (13c) auf dem Arm (13a) im Raum zwischen zwei aufeinanderfolgenden Modulen gegenüberstehen soll.

## Claims

1. Device for transmitting pedalling movement in cycles for movement or training of the type comprising an elliptical chainring with a central part which accepts a deformable elastomeric material, a circular chainring at the rear with freewheel and transmission belt, **characterized in that** the elliptical chainring (10) is designed with an internal arrangement within its thickness and width with the configuration of several modules (11) of triangular configuration, each module having two arms (11a) (11b) connected by a connecting part (11c) and each arm (11a) being arranged with a hollowed-out configuration (11d) forming a seat for a component (12) made of elastomeric material, and **in that** between two successive modules (11) is defined a space (e) for positioning a component (13) of spider-shaped configuration with a number of arms (13a) that is equal to the number of spaces formed between the modules, and **in that** the arms (13a) of said component are arranged with a seat-forming recess (13c) and on the opposite side a rib-forming projection (13d) that contributes to immobilizing the elastomeric blocks (12), and **in that** outer (14) and inner (15) end plates are attached one on either side of the elliptical chainring (10) allowing the insertion of connecting means (16) and of the pedal crank (17) and bottom bracket axle (18).

2. Device according to Claim 1, **characterized in that** the arm (11b) of the module (11) has a configuration with ribbing (11e) intended to face the recessed portion (11d) of the adjacent module or the recessed portion (13c) formed on the arm (13a) disposed in the space between two consecutive modules.
